# EUROPEAN PATENT SPECIFICATION

(11) **EP 3 427 581 B1**
(45) Date of publication and mention of the grant of the patent: **09.02.2022**
(21) Application number: 16894666.3
(22) Date of filing: 08.09.2016
(51) Int. Cl.: A01M 1/08, F21V 1/00, F21V 7/22, F21S 2/00, H05B 33/08

(54) **INSECT TRAP**
INSEKTENFALLE
PIÈGE À INSECTES

(30) Priority: 14.03.2016 KR 20160030419; 22.07.2016 KR 20160093593
(43) Date of publication of application: 16.01.2019
(73) Proprietor: Seoul Viosys Co. Ltd., Ansan-si, Gyeonggi-do 15429 (KR)
(72) Inventor: EOM, Hoon Sik, Ansan-si Gyeonggi-do 15429 (KR)
(74) Representative: Isarpatent
(86) International application number: PCT/KR2016/010104
(87) International publication number: WO 2017/159936

(56) References cited:
- CN-U- 203 788 948
- CN-Y- 200 953 798
- KR-A- 20120 097 077
- KR-A- 20150 124 766
- KR-B1- 101 349 733
- KR-Y1- 200 393 447
- KR-Y1- 200 425 859

## Description

### [Technical Field]

Exemplary embodiments relate to an insect trap, and more particularly, to an insect trap that attracts insects by decoy light and collects insects by suctioning the insects using an air stream generated by a suction fan.

### [Background Art]

Insects that may be potentially harmful to humans have been recently increased in number, due to change of climate conditions such as global warming and social policies. Harmful insects not only damage crops and livestock, but also negatively impact people by transmitting pathogenic bacteria, such as malaria, dengue, Japanese encephalitis, and the like. Particularly, studies on a mosquito insecticide method have been actively conducted due to fears related to the spread of zika virus (ZIKV).

Conventional insecticidal methods may include chemical pest control methods using an insecticide, biological pest control methods using mudfish and the like, physical pest control methods using a blacklight traps and/or carbon dioxide that attracts and kills the harmful insects by applying a high voltage, and environmental pest control methods such as removal of puddles or other environmental conditions favorable to insect larvae. However, chemical pest control methods may cause secondary contamination, and biological pest control methods or environmental pest control methods may be expensive, time consuming, and labor intensive. In addition, conventional physical pest control methods using an insecticide or insect trap may cause user inconvenience due to complicated configurations of the insect trap or endanger users from usage of the high voltage.

A UV light source may be used for various purposes, such as medical purposes including sterilization and disinfection, analysis purposes based on variation in intensity upon irradiation of UV light, industrial purposes such as UV curing, beauty treatment such as UV tanning, insect collection, identification of counterfeit notes, and the like. Typical UV lamps utilizing the UV light source include, for example, a mercury lamp, an excimer lamp, a deuterium lamp, and the like. However, typical UV lamps may have high power consumption, high heat generation, short lifespan, and environmental pollution due to toxic gas supplied to the lamps.

In order to address the problems of typical UV light sources, a UV light emitting device (LED) has found favor due to various merits including low power consumption and its eco-friendly characteristics. Accordingly, studies on development of an insect trap that collects insects using a suction fan after attracting the insects using decoy light have been made.

The documents CN 203788948 U and CN 200953798 Y describe known insect traps.

However, conventional insect traps that collect insects using the suction fan after attracting the insects by utilizing a typical UV LED have problems, such as: noise generated by a suction fan due to fouling of dead insects, such as mosquitoes, on the suction fan; escape of mosquitoes from the insect trap; insufficient suctioning of mosquitoes into the insect trap due to difficulty in controlling the speed of the suction fan; and low suction efficiency or high power consumption due to difficulty in controlling an air stream generated by the insect trap.

### [Disclosure]

### [Technical Problem]

Exemplary embodiments provide an insect trap that is more eco-friendly, provides a more convenient manufacturing process, and secures good efficiency in attracting and suctioning insects.

Exemplary embodiments provide an insect trap that can generate a suitable air stream velocity for suctioning mosquitoes while minimizing noise of a suction fan.

Exemplary embodiments provide an insect trap that is provided with a UV LED module having high efficiency in attraction of mosquitoes and emitting light having wavelengths and intensity harmless to humans.

Exemplary embodiments provide an insect trap that can generate a suitable air stream velocity for suctioning mosquitoes while suppressing noise caused by vibration of the insect trap.

### [Technical Solution]

The solution to the technical problem is achieved by the subject-matter of independent claim 1, defining per se the invention. Particular embodiments of the invention are defined in the dependent claims.

### [Advantageous Effects]

The insect trap according to the exemplary embodiments can provide an ecofriendly insecticidal method.

The insect trap according to the exemplary embodiments can selectively collect insects by controlling a size of an opening of the insect filter and, particularly, can prevent insects having a larger volume than mosquitoes from being introduced into the insect trap, thereby improving durability of the suction fan while suppressing noise generation.

The insect trap according to the exemplary embodiments includes the suction fan disposed below the motor and can suppress noise generation by controlling the rotational speed and diameter of the suction fan.

The insect trap according to the exemplary embodiments can generate UV light harmless to humans and capable of effectively attracting insects by controlling the wavelength and intensity of UV light emitted from a UV LED module.

The insect trap according to the exemplary embodiments can generate a high air stream velocity providing high insect suction efficiency by controlling the rotational speed of the suction fan and the heights of a main body, an insect collector, and a buttress of the insect trap.

The insect trap according to the exemplary embodiments can suppress noise generation while generating an air stream velocity providing high insect suction efficiency by controlling sizes or area ratios of insect passage openings, air collector side openings, an air exhaust port, and a mesh member.

The insect trap according to the exemplary embodiments can maximize the insect attraction effect not only by attracting insects using UV light, but also by generating heat while selectively generating carbon dioxide.

The insect trap according to the exemplary embodiments has a firm assembly structure to suppress noise generation due to vibration of the suction fan and the motor.

### [Description of Drawings]

FIG. 1 is a side view of an insect trap according to an exemplary embodiment.
FIG. 2 is a side-sectional view of the insect trap according an exemplary embodiment.
FIG. 3 is an exploded perspective view of an insect trap according an exemplary embodiment.
FIG. 4 is a perspective view of an insect filter of the insect trap according to an exemplary embodiment.
FIG. 5 is a perspective view of an air collector of the insect trap according to an exemplary embodiment.
FIG. 6 is a perspective view of an insect collector of the insect trap according to an exemplary embodiment.
FIG. 7 to 9 are views of UV LED modules according to exemplary embodiments.
FIG. 10 is a perspective view of an air collector to an exemplary embodiment.
FIG. 11 is a view of a mesh of the insect trap according an exemplary embodiment.
FIG. 12 is a view of a fastening portion between a buttress and a main body of the insect trap according to an exemplary embodiment.
FIG. 13 is a plan view of a UV LED installation unit of the insect trap according to an exemplary embodiment.
FIG. 14 is a view of a lower surface of a UV LED installation unit cap of the insect trap according to an exemplary embodiment.
FIG. 15 is a view of a UV LED installation unit of the insect trap according to an exemplary embodiment.
FIG. 16 is a view of the lower surface of the UV LED installation unit cap of the insect trap according to an exemplary embodiment.

### [DETAILED DESCRIPTION]

Hereinafter, embodiments of the present disclosure will be described in detail with reference to the accompanying drawings.

When an element or layer is referred to as being "disposed above" or "disposed on" another element or layer, it can be directly "disposed above" or "disposed on" the other element or layer or intervening elements or layers can be present. As used herein, spatially relative terms such as "upper" and "lower" are defined with reference to the accompanying drawings. Thus, it will be understood that "upper" can be used interchangeably with "lower".

Throughout the specification, like reference numerals denote like elements having the same or similar functions. In addition, as used herein, the singular forms "a," "an," and "the" may be intended to include the plural forms as well, unless context clearly indicates otherwise. Further, the terms "comprises," "comprising," "including," and "having" are inclusive and therefore specify the presence of stated features, integers, steps, operations, elements, and/or components, but do not preclude the presence or addition of one or more other features, integers, steps, operations, elements, components, and/or groups thereof. The steps, processes, and operations described herein are not to be construed as necessarily requiring their performance in the particular order discussed or illustrated, unless specifically identified as an order of performance. It is also to be understood that additional or alternative steps may be employed.

Hereinafter, embodiments of the present disclosure will be described in detail with reference to the accompanying drawings.

In accordance with one exemplary embodiment, there is provided an insect trap adapted to attract and collect insects using UV light and including: a main body; an insect filter disposed on the main body and allowing insects to pass therethrough; a motor disposed below the insect filter; a suction fan disposed under the motor and rotated by the motor; a plate-shaped UV LED installation unit disposed above the insect filter and provided with a UV LED module; a buttress supporting the UV LED installation unit above the main body while separating the UV LED installation unit above the main body so as to allow insects to be suctioned into a space between the main body and the UV LED installation unit; and an insect collector disposed under the main body and collecting insects.

According to the invention, the insect trap further includes an air collector disposed at a lower side of the main body and having a conical shape, the diameter of which gradually decreases away from the suction fan. With this structure, the insect trap can prevent mosquitoes collected in the insect collector from escaping from the insect trap.

According to an exemplary embodiment, the air collector may be mounted on the lower side of the main body and include air collector ribs, air collector side openings and an air exhaust port such that insects suctioned by the suction fan can be discharged to the insect collector.

According to an exemplary embodiment, a ratio of vertical distance from the main body to the UV LED installation unit to height of the main body may range from 1: 1 to 1:2 and a ratio of vertical distance from the insect collector to the UV LED installation unit to height of the insect collector may range from 1:0.5 to 1:2. With this structure, the insect trap can generate an air stream velocity suitable for attraction and suction of mosquitoes while minimizing noise generation.

According to an exemplary embodiment, the suction fan may have a rotational speed of 1,500 rpm to 2,800 rpm, and an air stream generated by the suction fan between the insect filter and the UV LED installation unit may have a velocity of 0.5 m/s to 3.0 m/s. With this structure, the insect trap can generate an air stream velocity suitable for attraction and suction of mosquitoes while improving durability of the motor by suppressing a phenomenon in which mosquitoes are attached to the suction fan due to physical impact by the suction fan.

According to an exemplary embodiment, the suction fan may include 2 to 6 fan blades and may have a rotational speed of 1,500 rpm to 2,800 rpm, and the insect trap may further include a UV LED installation unit cap mounted on an upper surface of the UV LED installation unit and extending beyond the UV LED installation unit in a horizontal direction. The UV LED installation unit cap may have a 3.5 cm to 7 cm greater diameter than the UV LED installation unit. With this structure, the insect trap can more effectively generate an insect suctioning air stream from the suction fan by reducing the flow distance of the air stream using the UV LED installation unit cap.

According to an exemplary embodiment, the suction fan may generate an air stream having a velocity of 0.5 m/s to 3.0 m/s, as measured in a region extending from the UV LED installation unit cap to an upper end of the main body in a vertical direction with respect to the ground.

According to an exemplary embodiment, the suction fan may include 2 to 6 fan blades and may have a rotational speed of 1,500 rpm to 2,800 rpm, and a minimum distance between the suction fan and an inner wall of the main body 110 may range from 1 mm to 5 mm. Accordingly, the insect trap can minimize noise generation by controlling the minimum distance between the suction fan and the inner wall of the main body while allowing mosquitoes to be attracted into the insect trap even without controlling the suction fan to rotate at an excessively high speed.

According to an exemplary embodiment, the insect collector may include a mesh through which air is discharged outside from the insect trap by the suction fan, and the mesh may include mesh ribs and mesh openings formed between the mesh ribs such that an air stream generated by the suction fan is discharged from the insect collector through the mesh openings, and a ratio of total area of insect passage openings to total area of the mesh openings may range from 1:0.8 to 1:3.0.

According to an exemplary embodiment, a ratio of total area of insect passage openings to total area of the mesh openings may range from 1:0.8 to 1:3.0; the suction fan may have a rotational speed of 1,500 rpm to 2,800 rpm; and an air stream generated by the suction fan between the insect filter and the UV LED installation unit may have a velocity of 0.5 m/s to 3.0 m/s. With this structure, the insect trap can prevent the suction fan from being rotated at an excessively high speed for generation of an air stream velocity suitable for attraction and suction of mosquitoes by controlling a flow passage of an air stream generated by the suction fan, thereby improving durability of the motor by suppressing a phenomenon in which mosquitoes are attached to the suction fan due to physical impact by the suction fan.

According to an exemplary embodiment, the suction fan may include 2 to 6 fan blades and may have a rotational speed of 1,500 rpm to 2,800 rpm; a minimum distance between the suction fan and an inner wall of the main body may range from 1 mm to 5 mm; the insect trap may have a noise level of 38 dBA or less as measured at a place separated a distance of 1.5 m therefrom in a horizontal direction; and an air stream generated by the suction fan between the insect filter and the UV LED installation unit may have a velocity of 0.5 m/s to 3.0 m/s. Accordingly, the insect trap can minimize noise generation by controlling the minimum distance between the suction fan and the inner wall of the main body while preventing the suction fan from being rotated at an excessively high speed for generation of an air stream velocity suitable for attraction and suction of mosquitoes.

According to the invention, the insect filter has a lattice shape including a plurality of insect passage openings selectively allowing insects to pass therethrough.

According to the invention, each of the insect passage openings has an area of 100 mm² to 225 mm². Accordingly, the insect trap can prevent insects having a larger volume than mosquitoes from entering the insect trap.

According to an exemplary embodiment, the suction fan may include 2 to 6 fan blades and may have a rotational speed of 1,500 rpm to 2,800 rpm, and a minimum distance between the suction fan and an inner wall of the main body may range from 1 mm to 5 mm.

According to an exemplary embodiment, the UV LED module may be mounted on a lower surface of the UV LED installation unit such that light emitted from the UV LED module travels in a horizontal direction with respect to the ground. Accordingly, the insect trap can emit light in the horizontal direction with respect to the ground, thereby improving efficiency in attraction of mosquitoes.

According to an exemplary embodiment, a material capable of reflecting UV light emitted from the UV LED module may be attached to or coated onto the lower surface of the UV LED installation unit. Accordingly, the insect trap can improve efficiency in attraction of mosquitoes with light emitted from the UV LED module.

According to an exemplary embodiment, the UV LED installation unit may be provided with a transparent UV LED module cover having a shape corresponding to the UV LED module and protecting the UV LED module. Accordingly, the insect trap can suppress damage to the UV LED module upon collision between mosquitoes and the UV LED module or can protect the UV LED module from dust.

According to an exemplary embodiment, the UV LED module may emit light having a wavelength of 340 nm to 390 nm.

According to an exemplary embodiment, the UV LED module may include one or more chip-on-board (COB) type UV LED chips or one or more LED packages mounted on a support substrate.

According to an exemplary embodiment, the UV LED module may include the UV LED chips or UV LED packages arranged in a plurality of rows.

According to an exemplary embodiment, the UV LED chips or the UV LED packages may be arranged in a zigzag arrangement on the support substrate.

According to an exemplary embodiment, in the UV LED module, the UV LED chips may be mounted on opposite surfaces of the support substrate or two support substrates each having the UV LED chips mounted thereon may be bonded to each other such that light can be emitted from the UV LED module in opposite directions.

According to an exemplary embodiment, in the UV LED module, the UV LED chips or the UV LED packages may be mounted on the support substrate such that the UV LED chips or the UV LED packages mounted on one surface of the support substrate do not overlap the UV LED chips or the UV LED packages mounted on the other surface of the support substrate. Accordingly, the UV LED chips or the UV LED packages have good heat dissipation efficiency, thereby improving durability of the UV LED module.

According to an exemplary embodiment, the insect trap may have a temperature of 30°C to 60°C measured in a space separated a distance of 5 mm or less from the UV LED chips. Accordingly, the insect trap can form a temperature enticing mosquitoes in addition to UV light as mosquito enticement factors.

According to an exemplary embodiment, the UV LED installation unit may be provided on a lower surface thereof with a photocatalyst filter capable of generating carbon dioxide using UV light emitted from the UV LED module as a catalyst. Accordingly, the insect trap can generate carbon dioxide in addition to UV light as mosquito enticing factors while providing a deodorization effect with the photocatalyst filter.

According to an exemplary embodiment, the UV LED module may consume a power of 1,000 mA to 1,500 mA at an input voltage of 12V and an input current of 75 mA to 85 mA. Accordingly, the insect trap can minimize power consumption while securing good efficiency in enticement of mosquitoes.

According to an exemplary embodiment, the buttress may be detachably coupled to the insect filter and may be secured by the insect filter. Accordingly, the buttress can be inserted into outer circumferential surfaces of the insect passage openings of the insect filter to be received in the main body, whereby the buttress can be firmly secured to the main body with the UV LED installation unit mounted on the buttress.

According to an exemplary embodiment, the buttress may be inserted into a gap between an inner wall and an outer wall of the main body and secured to the main body by a buttress fastening member. Accordingly, the buttress can be primarily inserted into the outer circumferential surfaces of the insect passage openings of the insect filter and then fitted into the main body, and can be more firmly secured to the main body by the buttress fastening member, thereby suppressing noise generation even when vibration is generated upon rotation of the suction fan.

According to an exemplary embodiment, the UV LED installation unit cap may be secured to the UV LED installation unit by fastening a UV LED installation unit cap-fastening member protruding from a lower surface of the UV LED installation unit cap to a UV LED installation unit cap-coupling hole formed in the UV LED installation unit. Accordingly, the UV LED installation unit cap can be detachably mounted on the UV LED installation unit. Thus, when the UV LED installation unit cap is separated from the UV LED installation unit, the UV LED module can be mounted on the UV LED installation unit by downwardly inserting the UV LED module into the UV LED installation unit through an upper surface thereof and then the UV LED installation unit cap can be mounted again on the UV LED installation unit.

According to an exemplary embodiment, the UV LED installation unit may be provided with a transparent UV LED module cover having a shape corresponding to the UV LED module and protecting the UV LED module, and the UV LED installation unit cap may be provided at a lower side thereof with a UV LED module-securing member and a first UV LED module cover-securing member to secure the UV LED module and the UV LED module cover to the UV LED installation unit. Accordingly, when the UV LED module is mounted on the UV LED installation unit, the UV LED module cover can be further mounted thereon after separating the UV LED installation unit cap from the UV LED installation unit, whereby the insect trap can prevent mosquitoes from being introduced into or contacting the UV LED module. Furthermore, with the structure wherein the UV LED module-securing member and the first UV LED module cover-securing member are disposed on the lower surface of the UV LED installation unit cap, the insect trap can prevent noise generation due to vibration of the UV LED module 161 and the UV LED module cover even if vibration is generated upon rotation of the suction fan 150.

According to an exemplary embodiment, the plurality of insect passage openings may be defined in an arc shape having a central angle of 20° to 40° by a plurality of circular members and a plurality of radial members arranged around a center of the insect filter, and each of the circular members may be spaced apart from another adjacent circular member by a distance of 1.0 cm to 1.5 cm. Accordingly, the insect trap can prevent insects having a larger volume than mosquitoes from entering the insect trap to suppress insects having large volumes from being attached to the suction fan due to physical impact by the suction fan by controlling the size of the insect passage openings, thereby improving durability of the motor while suppressing noise generation.

According to an exemplary embodiment, the buttress may be provided in plural and the UV LED module may be disposed between the buttresses so as not to block light emitted from the UV LED module in front of the UV LED module. Accordingly, the insect trap can improve efficiency in attraction of mosquitoes using UV light emitted from the UV LED module.

According to an exemplary embodiment, the buttresses may be disposed to block light emitted from the UV LED module at a side of the UV LED module.

According to an exemplary embodiment, the UV LED installation unit may further include a UV LED module insertion hole through which the UV LED module is mounted on the UV LED installation unit, and a length of a side surface of the buttress formed in a horizontal direction with respect to a direction of light emitted from the UV LED module may be 1 to 3 times longer than a length of a side surface of the UV LED module insertion hole formed in the horizontal direction with respect to the direction of light emitted from the UV LED module. Accordingly, when a user works at one side of the insect trap with reference to the direction of light emitted from the UV LED module in the insect trap, the insect trap can prevent the user from suffering eye fatigue while maintaining high efficiency in attraction of mosquitoes.

According to an exemplary embodiment, the insect trap may further include a UV LED installation unit cap-fastening member cap formed on an upper surface of the UV LED installation unit cap-coupling hole and covering the UV LED installation unit cap-fastening member. Accordingly, the insect trap can prevent mosquitoes from being introduced into a space between the UV LED installation unit cap-fastening member and the UV LED installation unit cap-coupling hole. As a result, the insect trap can prevent light emitted from the UV LED module from being blocked by the mosquitoes by preventing the mosquitoes from being introduced into the UV LED module insertion hole, thereby maintaining high efficiency in attraction of mosquitoes.

According to an exemplary embodiment, the insect trap may further include a second UV LED module cover-securing member protruding from the UV LED module securing member. The second UV LED module cover-securing member may secure the UV LED module cover by applying pressure thereto in a vertical direction or a horizontal direction with reference to the upper surface of the UV LED module installation unit. Accordingly, the insect trap allows the UV LED module cover to be firmly secured by the UV LED module cover-securing members, thereby preventing noise generation due to vibration of the UV LED module cover even if vibration is generated upon rotation of the suction fan.

As described above, despite some merits such as eco-friendliness and harmlessness to humans, a typical insect trap configured to collect insects, for example, mosquitoes, using a suction fan after enticing the mosquitoes using decoy light has problems such as very low enticing efficiency, high power consumption, and severe noise generation. Accordingly, in order to solve the problems of the typical insect trap, the inventors of the present disclosure carried out repeated studies and production tests to develop an eco-friendly insect trap that can maximize effects in enticing of insects, for example, mosquitoes, and provide improved suctioning effects without power loss while suppressing noise generation by controlling each component of the insect trap.

### [Embodiment 1]

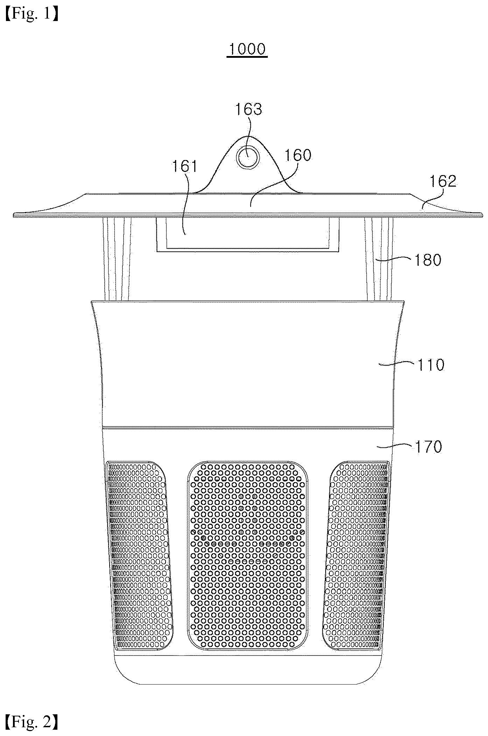

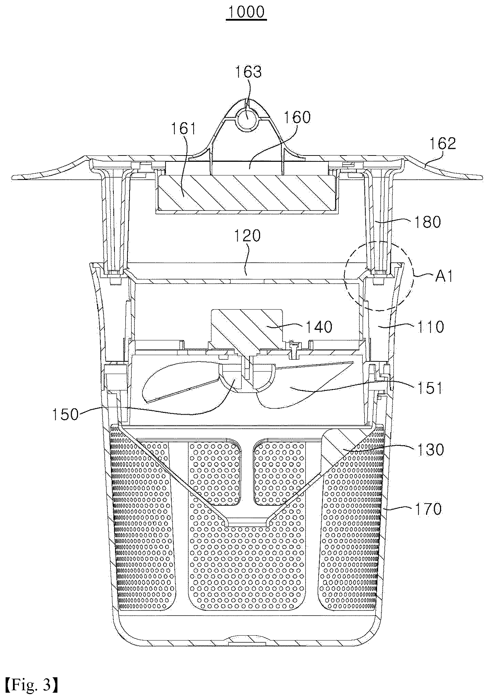

Figure 1 is a side view of an insect trap according to a first embodiment of the present disclosure, Figure 2 is a side-sectional view of the insect trap according to the first embodiment of the present disclosure, and Figure 3 is an exploded perspective view of the insect trap according to the first embodiment of the present disclosure.

Referring to Figure 1 to Figure 3, each component of an insect trap 1000 according to a first embodiment will be described in detail.

In order to collect insects after attracting the insects using UV light, the insect trap 1000 according to an exemplary embodiment includes: a main body 110; an insect filter 120 disposed on the main body 110 and allowing insects to pass therethrough; a motor 140 disposed below the insect filter 120; a suction fan 150 disposed under the motor 140 and rotated by the motor 140; a plate-shaped UV LED installation unit 160 disposed above the insect filter 120 and provided with a UV LED module 161; a buttress 180 supporting the UV LED installation unit 160 above the main body 110 while separating the UV LED installation unit 160 above the main body 110 so as to allow insects to be suctioned into a space between the main body 110 and the UV LED installation unit 160; and an insect collector 170 disposed under the main body 110 and collecting insects.

As used herein, insects are not limited to a particular kind of insect and may refer to various kinds of winged insects, particularly, mosquitoes.

### Main body 110

Although the main body is not limited to a particular shape and material, the main body 110 may have a cylindrical shape in order to receive the suction fan 150 therein and may be formed of a commercially available plastic material so as to allow indoor or outdoor use of the insect trap for a long period of time without significant increase in manufacturing costs. The main body 110 is open at upper and lower sides thereof to allow an air stream to pass through the upper and lower sides thereof. The main body 110 has a height of 2 cm to 20 cm, preferably 3 cm to 10 cm.

Referring to Figure 2 and Figure 3, the insect filter 120, the motor 140, and the suction fan 150 are mounted inside the main body 110 from the upper side of the main body 110 to the lower side thereof.

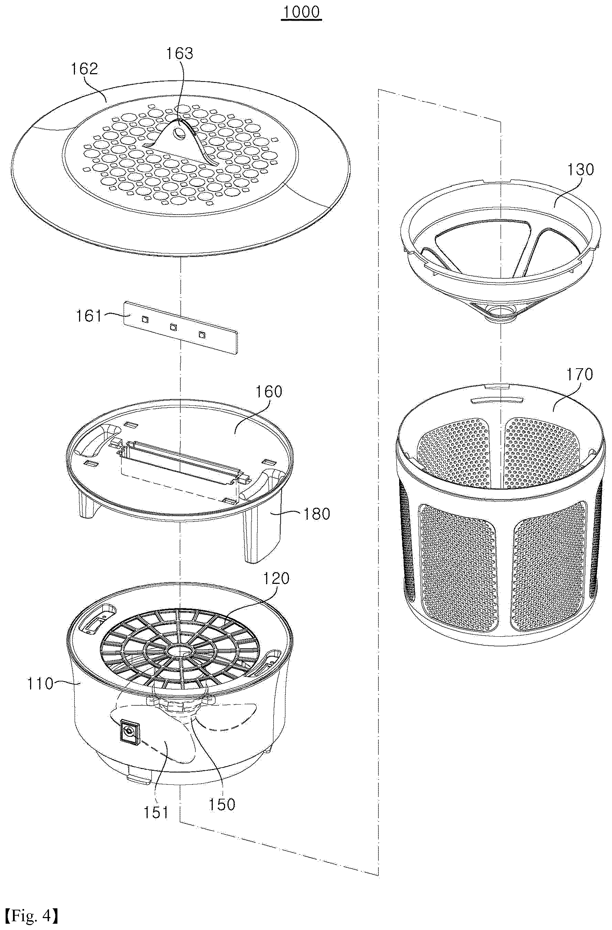

Figure 4 is a perspective view of the insect filter 120 of the insect trap according to the first embodiment of the present disclosure.

Referring to Figure 4, the insect filter 120 has a lattice shape including a plurality of insect passage holes 121 selectively allowing insects to pass therethrough, and the plurality of insect passage holes may be defined by circular members 122 and radial members 123. Specifically, the size of the insect passage holes 121 may be adjusted by taking into account an average size of insects to be collected, and for the insect filter 120 having a lattice shape as shown in Figure 4, the size of the insect passage holes 121 can be effectively controlled with low manufacturing costs.

A typical insect trap configured to collect insects using a suction fan in the related art has problems of a short replacement cycle of the insect collector due to collection of insects, such as butterflies, dragonflies and flies, which have a larger volume than mosquitoes, and negative influence on the ecosystem due to collection of beneficial insects as well as harmful insects. Moreover, the typical insect trap has problems such as decrease in lifespan of the motor and noise generation by the suction fan due to attachment of large insects to the suction fan. Accordingly, the inventors of the present disclosure developed the insect trap 1000 that allows the size of the insect passage holes 122 to be controlled such that the insect trap can selectively suction insects and includes an economically feasible insect filter 120.

The plural insect passage holes 121 are divided from one another by pluralities of circular members 122 and radial members 123 arranged around the center of the insect filter 120 and have an arc shape having a central angle of 20° to 40°, and each of the circular members 122 is separated a distance of 1.0 cm to 1.5 cm from another adjacent circular member 122. Within these ranges, each of the insect passage holes 121 has an area of 100 mm2 to 225 mm2. Thus, the insect passage holes 121 allow selective passage of insects, particularly, mosquitoes, therethrough, while preventing collection of large insects such as butterflies, dragonflies, flies, and the like into the insect trap 1000, thereby preventing deterioration in durability of the motor while suppressing noise generation from the suction fan 150.

FIG. 4 shows the shape of the insect passage opening 121. Referring to FIG. 2 and FIG. 4, the insect filter 120 may further include buttress coupling holes 182 formed on an outer circumferential surface of the insect passage opening 121. Accordingly, buttresses 180 are primarily inserted into the outer circumferential surfaces of the insect passage openings 121 of the insect filter 120 to be received in the main body 110, whereby the buttresses 180 can be firmly secured to the main body 110 with the UV LED installation unit 160 mounted on the buttresses 180.

In addition, it is desirable that the suction fan 150 be controlled to allow insects to be suctioned through a lower portion of the suction fan 150 while preventing the insects from being attached to the suction fan 150. In a conventional insect trap that collects insects using a typical suction fan, insects can be attached to fan blades, which can adversely affect the rotational balance of the suction fan, thereby causing deterioration in durability of the motor and noise increase. When the rotational speed of the suction fan is reduced in order to prevent insects from being attached to the fan blades, however, there is a significant reduction in collection efficiency with respect to insects adjacent the insect trap. More particularly, since insects generally tend to stop flying at an air stream velocity of 0.8 m/s or more and try to escape from an air stream at an excessively high air stream velocity, the inventors of the present invention developed an insect trap 1000 adapted to prevent insects from being attached to the fan blades 151 while still causing mosquitoes to stop flying and be collected therein through a suction air stream generated by the suction fan 150.

To this end, the number of fan blades 151 may be two to six, preferably three or four, and the suction fan 150 may have a rotational speed of 1500 rpm to 2800 rpm, preferably 1800 rpm to 2800 rpm. If the number of fan blades 151 is less than two or the rotational speed of the suction fan 150 is less than 1500 rpm, there can be a problem of deterioration of a mosquito collection effect, and if the number of fan blades 151 exceeds six or the rotational speed of the suction fan 150 exceeds 2800 rpm, there is a problem of excessive attachment of dead bodies of mosquitoes to the suction fan 151 or increase of noise above 38 dBA.

The fan blades 151 may be formed in a rounded shape having a constant or variable radius of curvature instead of a flat shape, and may have a height of 5 mm to 30 mm from a lowermost end to an uppermost end thereof. The suction fan 150 may have a diameter of 60 mm to 120 mm, preferably 80 mm to 110 mm. In some embodiments, a minimum distance between the suction fan 150 and an inner wall of the main body 110 may be controlled to 1 mm to 5 mm in order to minimize noise generation by the suction fan 150 while effectively generating a suction air stream.

Furthermore, a ratio of vertical distance from the main body 110 to the UV LED installation unit 160 to height of the main body 110 may range from 1:1 to 1:2, and a ratio of vertical distance from the insect collector 170 to the UV LED installation unit 160 to height of the insect collector 170 may range from 1:0.5 to 1:2. Within these ratios, the insect trap 100 can easily suction insects adjacent the insect trap 1000 while preventing the insects from being attached to the suction fan 150.

Accordingly, within these numerical ranges, the insect trap 1000 can control an air stream generated between the insect filter 120 and the UV LED installation unit 160 by the suction fan 150 to have a speed of 0.5 m/s to 2.5 m/s, preferably 0.6 m/s to 2.5 m/s, more preferably 0.7 m/s to 2.5 m/s, for example, 0.7 m/s to 2.0 m/s, and can cause insects to stop flying and being collected with high efficiency into the insect collector 170 without attachment of the insects to the suction fan 150, while suppressing noise generation by the suction fan 150.

With the structure wherein the motor 140 is disposed below the insect filter 120 and the suction fan 150 is provided to a lower side of the motor 140, the insect trap 1000 can considerably reduce noise generation by the motor 140 and the suction fan 150.

### Air collector 130

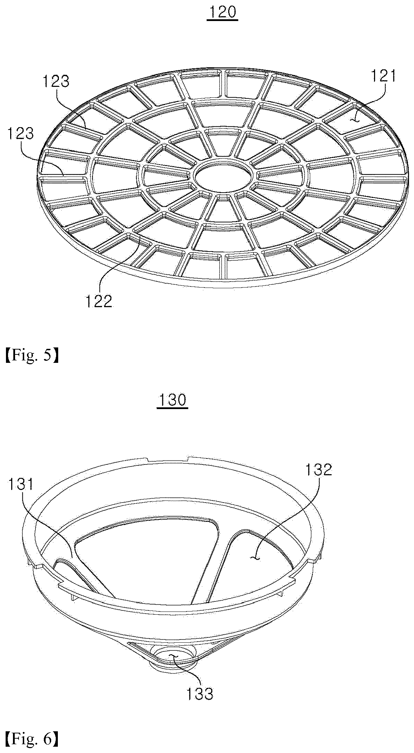

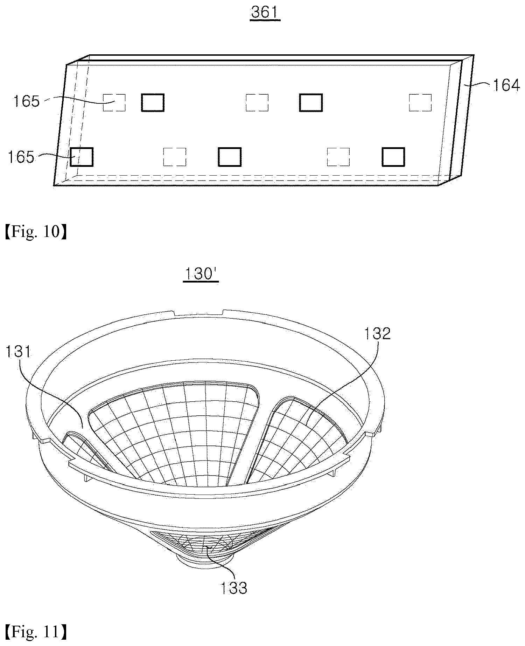

Figure 5 and Figure 10 are views of an air collector according to one embodiment of the present disclosure.

The air collector 130 or 130' is provided to the lower side of the main body 110, and may include air collector ribs 131, air collector side openings 132, and an air exhaust port 133 such that insects suctioned by the suction fan 150 can be discharged to the insect collector 170. The air collector 130 has a conical shape, the diameter of which gradually decreases with increasing distance from the suction fan 150. Namely, the air collector 130 preferably has a conical shape in order to allow an air stream generated by the suction fan 150 to effectively flow to the insect collector 170 disposed at a lower side of the insect trap without dispersing the air stream, and includes the air collector side openings 132 to allow the air stream generated by the suction fan 150 to effectively escape from the insect trap 1000. The air collector side openings 132 are not limited to a particular shape and may have a mesh shape, as shown in Figure 10, and the area of the side openings formed in the mesh shape may be controlled to prevent insects, particularly, mosquitoes, from passing therethrough.

Accordingly, the insect trap 1000 according to the first embodiment may be configured to collect insects in the insect collector 170 and to prevent the insects from escaping from the insect trap 1000 through the air collector 130 when the insects are suctioned into the insect trap 1000 by the suction fan 150.

On the other hands, a ratio of diameter of the air exhaust port 133 to diameter of the suction fan 150 may range from 1:2 to 1:9, preferably 1:3 to 1:5. Within this range of ratio, the insect trap enables easy control of air stream velocity by the suction fan 150. In alternative exemplary embodiments, the air collector 130 may be omitted.

### Insect collector 170

Figure 6 is a perspective view of an insect collector of the insect trap according to the first embodiment of the present disclosure and Figure 11 is a view of a mesh member of the insect trap according to the first embodiment of the present disclosure.

Referring to Figure 6 and Figure 11, the insect collector 170 may include at least one mesh member 171 through which air is discharged to the outside by the suction fan 150. The mesh member 171 may include mesh ribs 172 and mesh openings 173 formed between the mesh ribs 172 such that an air stream generated by the suction fan 150 is discharged from the insect collector 170 through the mesh openings 173. The mesh opening 173 may have a diameter of 1 mm to 3 mm to provide a smooth air flow while preventing the collected insects from escaping therethrough.

Specifically, the insect collector 170 may include one to ten mesh members 171, for example, three to eight mesh members, and each of the mesh members 171 may include 300 to 700 mesh openings 173, preferably 400 to 600 mesh openings 173.

Furthermore, a ratio of total area of the insect passage holes 121 to total area of the mesh openings 173 may range from 1:0.8 to 1:3.0, preferably from 1:0.8 to 1:2.0. Within this range of ratio, insects collected in the insect collector 170 do not obstruct an air stream discharged from the insect trap 1000 even in the case where the insects collected in the insect collector 170 occupy 1/2 the volume of the insect collector 170.

That is, the insect collector 170 allows an air stream generated by the suction fan 150 to be effectively discharged from the insect trap 1000, whereby mosquitoes collected in the insect collector 170 are dried and killed.

### UV LED installation unit 160

Referring to Figure 1 to Figure 3, the UV LED installation unit 160 may have a plate shape. Specifically, the UV LED installation unit 160 may be formed in a similar shape and/or size to the shape and size of the main body 110. For example, in an embodiment wherein the main body 110 has a circular shape, the UV LED installation unit 160 may have a disk shape having a similar size to the size of the main body 110.

With this structure, the UV LED installation unit 160 restricts flow of an air stream generated by the suction fan 150 into a space defined between the UV LED installation unit 160 and the main body 110, thereby improving efficiency of generating a suction air stream into the insect trap 1000. As a result, the suction fan 150 is not required to be rotated at high rpm, thereby minimizing noise generation.

In some embodiments, the insect trap may further include a buttress 180 configured to support the UV LED installation unit 160 above the main body 110 while separating the UV LED installation unit 160 from the main body 110 so as to allow insects to be suctioned into the space between the main body 110 and the UV LED installation unit 160, and the UV LED installation unit 160 may include a UV LED module 161 and may further include a UV LED installation unit cap 162.

Although the shape and number of buttresses 180 are not particularly limited, two buttresses 180 are disposed to face each other in order to minimize restriction of an insect introduction area by the buttresses 180 while stably supporting the UV LED installation unit 160.

Referring to Figure 3, the insect trap is provided with a plurality of buttresses 180 and the UV LED module 161 is disposed between the buttresses 180 so as not to block light emitted from the UV LED module 161 in front of the UV LED module 161. Accordingly, the insect trap according to the first embodiment can improve efficiency in attraction of mosquitoes using UV light emitted from the UV LED module 161.

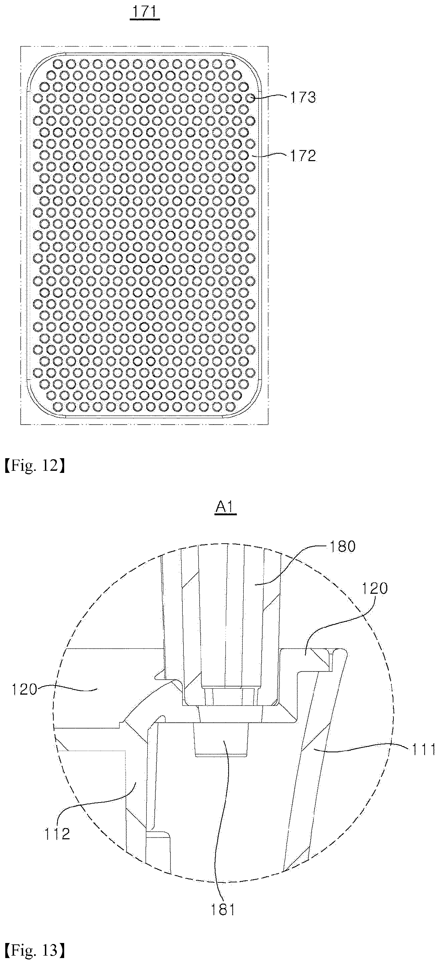

Referring to FIG. 3 and FIG. 13, the buttresses 180 may be disposed to block light emitted from the UV LED module 161 at a side of the UV LED module 161. For example, the UV LED installation unit 160 may further include a UV LED module insertion hole 60 through which the UV LED module 161 is mounted on the UV LED installation unit 160, and the length of a side surface of the buttress 180 formed in the horizontal direction with respect to a direction of light emitted from the UV LED module 161 may be 1 to 3 times longer than the length of a side surface of the UV LED module insertion hole 60 formed in the horizontal direction with respect to the direction of light emitted from the UV LED module 161.

Accordingly, when a user works at one side of the insect trap 1000 with reference to the direction of light emitted from the UV LED module 161 in the insect trap 1000, the insect trap 1000 can prevent the user from suffering eye fatigue while maintaining high efficiency in attraction of mosquitoes.

Referring to FIG. 12, the buttresses 180 may be primarily inserted into the outer circumferential surfaces of the insect passage openings of the insect filter 120 and then fitted into a gap between an outer wall 111 and an inner wall 112 of the main body. Furthermore, referring to FIG. 12 and FIG. 13, each of the buttress coupling holes 182 is formed at a distal end of the buttress 180 extending from a lower surface of the UV LED installation unit 160 such that the buttress 180 can be firmly secured to the main body 110 by a buttress fastening member 181. With this structure, the insect trap according to the first embodiment can suppress noise generation even when vibration is generated from the suction fan 150.

The height of the buttress 180 may be adjusted such that the UV LED installation unit 161 is separated a distance of 1 cm to 10 cm, preferably 3 cm to 5 cm, from the main body 110 in a vertical direction. Specifically, the height of the buttress may be the same as the separation distance between the UV LED installation unit 161 and the main body 110. If the separation distance between the UV LED installation unit 161 and the main body 110 in the vertical direction is less than 3 cm, the space defined between the UV LED installation unit 160 and the main body 110, into which insects are suctioned, becomes too small, thereby causing deterioration in insect collection efficiency, and if the separation distance therebetween is greater than 5 cm, the air stream generated by the suction fan 150 does not have sufficient intensity, thereby causing deterioration in insect collection efficiency.

Accordingly, when insects are enticed by UV light and approach the insect trap 1000, the insects are suctioned into the space between the main body 110 and the UV LED installation unit 160 by the suction air stream generated by the suction fan 150, pass through the insect filter 120 and the suction fan 150, and finally collected by the insect collector 170 disposed under the air collector 130.

Referring to FIG. 13, the UV LED module 161 may be mounted on the UV LED installation unit 160 by downwardly inserting the UV LED module 161 into the UV LED installation unit 160 through an upper surface thereof. Specifically, the UV LED module 161 may be mounted on the lower surface of the UV LED installation unit 160 through a UV LED module insertion hole 60. By way of example, as shown in FIG. 3, the UV LED installation unit cap 162 is separated from an upper end of the UV LED installation unit 160 and then the UV LED module 161 is inserted into the UV LED module insertion hole 60 on the upper surface of the UV LED installation unit 160 in order to mount the UV LED module 161 thereon.

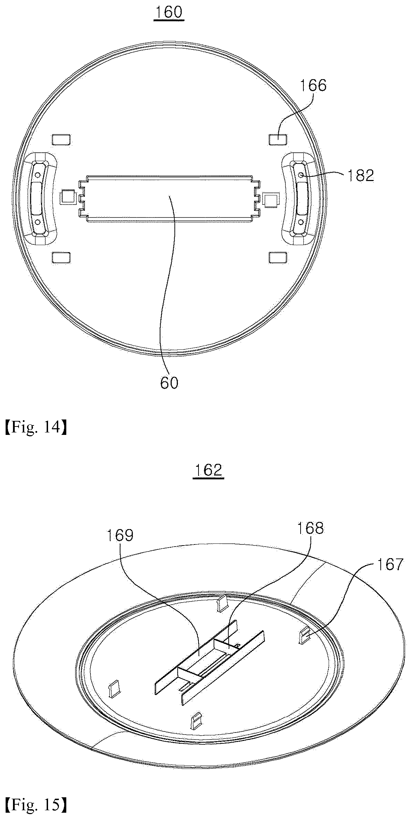

Referring to FIG. 13 and FIG. 14, the UV LED installation unit cap 162 may be detachably mounted on the UV LED installation unit 160 by inserting a UV LED installation unit cap-fastening member 167, which is formed on a lower surface of the UV LED installation unit cap 162, into a UV LED installation unit cap-coupling hole 166 formed in the UV LED installation unit 160. In addition, the insect trap according to the first embodiment may further include a transparent UV LED module cover, which has a shape corresponding to the UV LED module 161 and protects the UV LED module 161. Accordingly, the insect trap 1000 according to the embodiment can prevent mosquitoes introduced into the insect trap from being introduced into a space in which the UV LED module 161 is mounted on the UV LED installation unit 160, or from directly contacting the UV LED module 161, thereby preventing deterioration in durability of the UV LED module 161 by foreign matter or mosquitoes introduced into the insect trap.

Referring to FIG. 15, the insect trap 1000 according to the embodiment may further include a UV LED installation unit cap-fastening member cap 70, which is formed on an upper surface of the UV LED installation unit cap-coupling hole 166 and covers the UV LED installation unit cap-fastening member 167. The UV LED installation unit cap-fastening member cap 70 may be formed of any material. For example, the UV LED installation unit cap-fastening member cap 70 may be formed of a plastic material to secure economic feasibility or may be formed of a rubber material to reduce noise due to vibration of the UV LED installation unit 260 and the UV LED installation unit cap 162; 262.

Accordingly, the insect trap 1000 can prevent mosquitoes from being introduced into a space between the UV LED installation unit cap-fastening member 167 and the UV LED installation unit cap-coupling hole 166. As a result, the insect trap 1000 can prevent light emitted from the UV LED modules 161, 261, 361 from being blocked by the mosquitoes by preventing mosquitoes from being introduced into the UV LED module insertion hole 60, thereby maintaining high efficiency in attraction of mosquitoes.

Furthermore, referring to FIG. 14, the insect trap 1000 may include a UV LED module-securing member 168 and a first UV LED module cover-securing member 169 disposed on the lower surface of the UV LED installation unit cap 162 to secure the UV LED module 161 and the UV LED module cover (not shown) to the UV LED installation unit 160.

Accordingly, when the UV LED module 161 is mounted on the UV LED installation unit 160, the UV LED module cover (not shown) is further mounted thereon after separating the UV LED installation unit cap 162 from the UV LED installation unit 160, whereby the insect trap 1000 can prevent mosquitoes from being introduced into or contacting the UV LED module 161. Furthermore, with the structure wherein the UV LED module-securing member 168 and the first UV LED module cover-securing member 169 are disposed on the lower surface of the UV LED installation unit cap 162, the insect trap 1000 can prevent noise generation due to vibration of the UV LED module 161 and the UV LED module cover even if vibration is generated upon rotation of the suction fan 150.

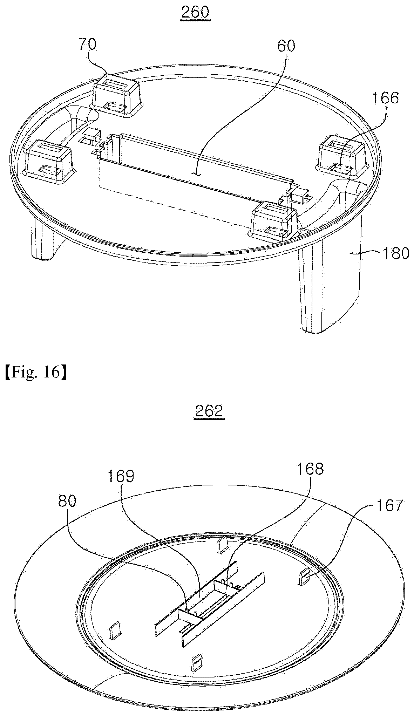

Furthermore, referring to FIG. 16, the insect trap 1000 may further include a second UV LED module cover-securing member 80, which protrudes from the UV LED module securing member 168. The second UV LED module cover-securing member 168 may secure the UV LED module cover (not shown) by applying pressure thereto in the vertical direction or the horizontal direction with reference to the upper surface of the UV LED module installation unit 160. By way of example, as shown in FIG. 16, the second UV LED module cover-securing member 80 may protrude from a single UV LED module securing member 168 and may secure two UV LED module covers (not shown) disposed between the UV LED modules 161, 261, 361 by applying pressure thereto in a direction away from the UV LED modules.

Accordingly, the insect trap 1000 allows the UV LED module cover (not shown) to be firmly secured by the UV LED module cover-securing members, thereby preventing noise generation due to vibration of the UV LED module cover (not shown) even if vibration is generated upon rotation of the suction fan 150.

In addition, the UV LED module 161 mounted on the UV LED installation unit 160 may be electrically connected to a power source.

In the insect trap 1000 according to the first embodiment, the UV LED module 161 may be mounted on the UV LED installation unit 160 such that light emitted from the UV LED module 161 travels in a horizontal direction with respect to the ground. Insects generally stay at a height of about 1.5 m from the ground for the longest period of time upon flying. Thus, in the structure wherein the insect trap 1000 is installed at a height of about 1.5 m from the ground, insects are strongly stimulated by light emitted from the UV LED module 161 in the horizontal direction with respect to the ground and can be effectively enticed into the insect trap 1000.

Furthermore, as shown in Figure 3, the UV LED installation unit cap 162 is formed on an upper surface thereof with a UV LED installation unit cap holder 163 to hold the insect trap 1000 to a tree branch and the like at a height of about 1.5 m when used outdoors.

Although not shown in Figure 3, a material capable of reflecting UV light emitted from the UV LED module 161 may be attached to or coated onto a lower surface of the UV LED installation unit 160. Silver or aluminum may be used as the material capable of reflecting the UV light, without being limited thereto, and may be coated onto the lower surface of the UV LED installation unit 160. The lower surface of the UV LED installation unit 160 may further include a round or irregular pattern having a variety of shapes to scatter the light emitted from the UV LED module 161.

Referring to Figure 1 to Figure 3, the UV LED installation unit cap 162 may be mounted on an upper surface of the UV LED installation unit 160 and extends beyond the UV LED installation unit 161 in the horizontal direction. The material and shape of the UV LED installation unit cap 162 may be the same as those of the UV LED installation unit 160, without being limited thereto. For example, in an embodiment wherein the UV LED installation unit 160 has a circular shape, the UV LED installation unit cap 162 may have a shape coaxial with the UV LED installation unit 160 and having a larger diameter than the UV LED installation unit 160.

Preferably, the UV LED installation unit cap 162 has a 3.5 cm to 7 cm greater diameter than the UV LED installation unit 160. If the diameter of the UV LED installation unit cap 162 is greater than the UV LED installation unit 160 by a length of less than 3.5 cm, the air stream generated by the suction fan 150 can be dispersed instead of being collected towards the side surface or the lower surface of the UV LED installation unit 160, and if the diameter of the UV LED installation unit cap 162 is greater than the UV LED installation unit 160 by a length of greater than 7 cm, there can be a problem of unnecessarily blocking the light emitted from the UV LED module 161. Specifically, the UV LED installation unit 160 may have a diameter of 8 cm to 20 cm and the UV LED installation unit cap 162 may have a diameter of 10 cm to 25 cm. Within these diameter ranges, the diameter of the UV LED installation unit cap 162 is greater than the diameter of the UV LED installation unit 160 by a length of 3.5 cm to 7 cm. Further, an outer periphery of the UV LED installation unit cap 162 has a linear or curved shape and may extend to be placed below the UV LED installation unit, specifically, by a length of about 6 mm to 10 mm, thereby effectively blocking the suction air stream into the insect trap 1000.

In the insect trap 1000 according to the first embodiment, wherein the UV LED installation unit 160 and the UV LED installation unit cap 162 have diameters within the above ranges, the air stream generated by the suction fan 150 has a velocity of 0.5 m/s to 3.0 m/s, preferably 0.5 m/s to 2.5 m/s, more preferably 0.6 m/s to 2.5 m/s, for example, 0.7 m/s to 2.5 m/s, specifically, 0.7 m/s to 2.0 m/s, as measured in a region extending from the UV LED installation unit cap 162 to an upper end of the main body 110 in the vertical direction, thereby providing a suitable air stream velocity causing mosquitoes to stop flying and be suctioned into the insect trap 1000.

As described above, the UV LED installation unit 161 is separated a distance of 2 cm to 5 cm from the insect filter 120 and the diameter of the UV LED installation unit cap 162 is adjusted to maintain the air stream generated by the suction fan 150 without being influenced by external wind, whereby the insect trap can stably suction insects, enticed by UV light from the UV LED module, into the insect filter 120.

### UV LED module 161, 261, 361

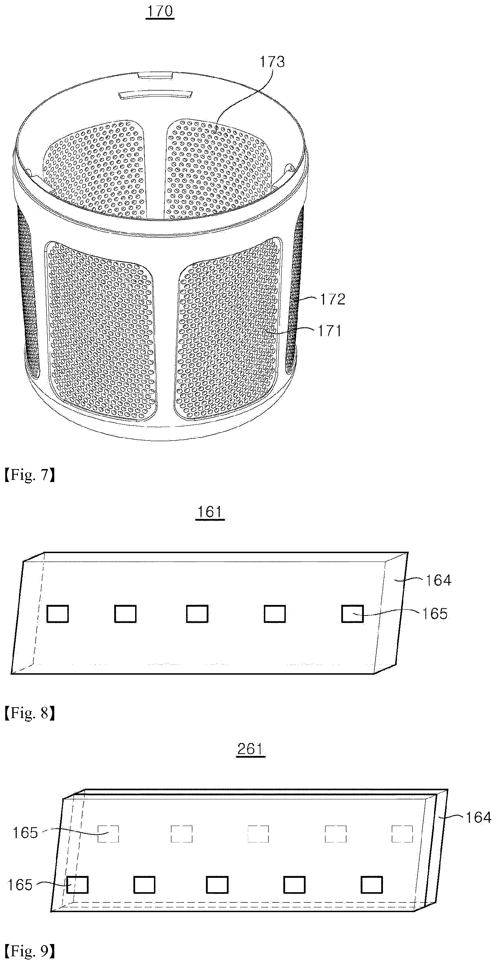

Figure 7 to Figure 9 are views of UV LED modules according to embodiments of the present disclosure.

The UV LED modules 161, 261, 361 can emit at least one type of light selected from among UV light, visible light and IR light, preferably UV light. With regard to insect enticing wavelengths, reports say that flies and leafhoppers are enticed by light at a wavelength of about 340 nm or about 575 nm, and moths and mosquitoes are enticed by light having a wavelength of about 366 nm. In addition, reports say that other general harmful insects are relatively enticed by light having a wavelength of about 340 nm to 380 nm. Moreover, with regard to insect enticing wavelengths in the visible light range, Korean Patent Publication No. 2013-0049475 A and No. 2014-0010493 A disclose enticing activity of insects by white, yellow, red, green and blue light.

Preferably, the UV LED modules 161, 261, 361 emit light having a wavelength of 340 nm to 390 nm. More preferably, the UV LED modules 161, 261, 361 are controlled to emit light having a wavelength of about 365 nm, which strongly entices mosquitoes and has low harmfulness to humans.

Each of the UV LED modules 161, 261, 361 may include one or more chip-on-board (COB) type UV LED chips 165 or one or more LED packages mounted on a support substrate 164. The UV LED chips 165 or the UV LED packages may be arranged in a plurality of rows. Alternatively, the UV LED chips 165 or the UV LED packages may be disposed in a zigzag arrangement in order to prevent the support substrate 164 from overheating.

The support substrate 164 may have a panel shape having a predetermined thickness and include a printed circuit board (PCB) having an integrated circuit or interconnection lines therein. By way of example, the support substrate 164 may be a printed circuit board having a circuit pattern printed in a region on which the UV LED chip 165 will be mounted, and may be composed of a material such as a metal, a semiconductor, a ceramic, a polymer, and the like.

Specifically, each of the UV LED modules 161, 261, 361 may have a structure wherein the UV LED chips 165 are mounted on one surface of the PCB having an elongated plate shape. In each of the UV LED modules 161, 261, 361, the plurality of UV LED chips 165, for example, 4 to 10 UV LED chips 165 are arranged at certain intervals on the PCB in a longitudinal direction of the PCB. Heat dissipation fins may be provided to the other surface of the PCB to dissipate heat generated from the UV LED chips 165, and both ends of each of the UV LED modules 161, 261, 361 may be provided with terminals which will be connected to a power source to supply power to the PCB.

Each of the UV LED modules 161, 261, 361 may be manufactured to consume a power of 800 mA to 2,000 mA, preferably 1,000 mA to 1,500 mA, at an input voltage of 12V and an input current of 75 mA to 85 mA. Within this range, the UV LED modules 161, 261, 361 can effectively entice insects by emitting light having a wavelength of 365 mm and harmless to humans while minimizing power consumption.

In each of the UV LED modules 161, 261, 361, the UV LED chips 165 may be mounted on opposite surfaces of the support substrate 164 or two support substrates 164 each having the UV LED chips 165 mounted thereon may be bonded to each other such that light can be emitted from each of the UV LED modules 161, 261, 361 in opposite directions, thereby improving insect attraction efficiency with UV light.

In each of the UV LED modules 161, 261, 361, the UV LED chips 165 or the UV LED packages may be mounted on the support substrate 164 such that the UV LED chips 165 or the UV LED packages mounted on one surface of the support substrate 164 do not overlap the UV LED chips 165 or the UV LED packages mounted on the other surface of the support substrate 164. The UV LED chips 165 or the UV LED packages may be arranged in a plurality of rows or in a zigzag arrangement, without being limited thereto. Accordingly, the insect trap 1000 according to the first embodiment can minimize power consumption while enlarging an irradiation range, and can improve durability of each of the UV LED modules 161, 261, 361 through effective dissipation of heat generated from the UV LED chips 165.

While electric energy supplied to the UV LED modules 161, 261, 361 is converted into light energy and heat energy, heat is generated from the UV LED chips 165 and a space separated a distance of 5 mm or less from the UV LED chips 165 may have a temperature of 30°C to 60°C. Since insects, particularly, mosquitoes, are strongly enticed towards a material having a temperature of about 38°C to 40°C, which is similar to mammal body temperature, the insect trap 1000 can strongly entice insects through heat generated from the UV LED modules 161, 261, 361 in addition to enticing effects of the UV LED modules 161, 261, 361.

Accordingly, the insect trap 1000 according to the first embodiment of the present disclosure employs the UV LED modules 161, 261, 361 manufactured to consume a power of 800 mA to 2,000 mA, preferably 1,000 mA to 1,500 mA, at an input voltage of 12V and an input current of 75 mA to 85 mA, and includes the UV LED chips 165 or the UV LED packages mounted on the support substrate 164 such that the UV LED chips 165 or the UV LED packages mounted on one surface of the support substrate 164 do not overlap the UV LED chips 165 or the UV LED packages mounted on the other surface of the support substrate. Thus, the insect trap 1000 according to the first embodiment can emit light harmless to humans and having high insect enticing efficiency while minimizing power consumption and can generate heat such that surroundings of the insect trap 1000 have a temperature providing high insect enticing effects.

### [Embodiment 2]

An insect trap 2000 (not shown) according to a second embodiment of the present disclosure has the same configuration as the insect trap according to the first embodiment except for a photocatalyst filter. Hereinafter, the photocatalyst filter will be described in detail.

The photocatalyst filter can perform a deodorization function using UV light emitted from the UV LED module 161 as a catalyst and can generate carbon dioxide. The photocatalyst filter may be disposed at any location in the insect trap 2000 so long as the photocatalyst filter can receive UV light emitted from the UV LED module 161. For example, the photocatalyst filter may be disposed on the main body 110, the insect filter 120, the air collector 130, the UV LED installation unit 160, the UV LED installation unit cap 162, and the mesh member 171, preferably on a lower surface of the UV LED installation unit 160 and/or a lower surface of the UV LED installation unit cap 162.

Preferably, the photocatalyst filter is embedded in the insect trap instead of being provided in a protrusion structure. Specifically, in a side-embedded type wherein the photocatalyst filter is embedded in a side surface of the insect trap 1000 to contact an air stream generated in the insect trap 1000, an inner space of the insect trap 1000 can be efficiently constituted without obstructing suction of insects and air into the insect trap 1000.

The photocatalyst filter may be formed by depositing a photocatalyst layer on a frame. By way of example, the photocatalyst filter may be formed by embedding a photocatalyst layer in a porous material, such as metal foam and carbon foam, or in a ceramic material.

The photocatalyst layer may include at least one compound selected from the group consisting of, for example, titanium oxide (TiO2), silicon oxide (SiO2), tungsten oxide (WO3), zinc oxide (ZnO), zirconium oxide (ZrO2), tin oxide (SnO2), cerium oxide (CeO2), iron oxide (FeO3), zinc sulfide (ZnS), cadmium sulfide (CdS), and strontium titanate (SrTiO3), which can act as photocatalyst media. In one example, the photocatalyst layer may be realized by coating a titanium oxide (TiO2) layer, or by depositing cooking oil or a tangerine liquid onto a contact portion between the photocatalyst filter and a ceramic material.

The photocatalyst layer can generate CO2, which has high efficiency in enticement of mosquitoes, while providing the deodorization effect. Specifically, when the photocatalyst layer is irradiated with light emitted from the UV LED module 161 and inducing photocatalysis reaction, radicals exhibiting strong reducibility can be generated through photocatalysis reaction known in the art. Then, an organic component around the photocatalyst layer can be decomposed by the radicals to generate carbon dioxide. Carbon dioxide is known as a gas capable of enticing insects, particularly, mosquitoes. For example, light inducing photocatalysis reaction may be UV light in a wavelength band of about 200 nm to 400 nm. That is, since light inducing photocatalysis reaction has not only a function of generating radicals when reaching the photocatalyst layer, but also a function of enticing insects, the wavelength of light may be determined by taking into account two aspects, that is, photocatalysis reaction and direct enticement of insects.

In some embodiments, in order to promote generation of carbon dioxide, an enticing substance such as lactic acid, amino acid, sodium chloride, uric acid, ammonia and protein decomposition substances may be provided to the photocatalyst filter. By way of example, as a method of providing the enticing substance, the enticing substance may be deposited onto the photocatalyst layer in the photocatalyst filter or may be periodically or aperiodically sprayed onto the photocatalyst layer, without being limited thereto. As a result, the concentration of carbon dioxide increases, thereby improving insect enticing efficiency.

On the other hand, organic materials in air surrounding the photocatalyst filter are decomposed by the radicals generated by photocatalysis reaction, thereby providing an effect of purifying air around the insect trap 2000.

That is, the insect trap 2000 according to the second embodiment of the present disclosure can use not only light and heat generated from the UV LED module 161 but also carbon dioxide as insect enticing media, thereby significantly improving efficiency in enticing insects, particularly, mosquitoes.

Next, the present invention will be described in more detail with reference to some examples. However, it should be understood that these examples are provided for illustration only and are not to be construed in any way as limiting the present invention.

### Preparative Example 1

Referring to Figure 3, an insect trap having a total height of 199 mm and including a main body 110 having a height of 54 mm, a collector 170 having a height of 110 mm and two buttresses 180 facing each other and each having a height of 35 mm was fabricated. The main body 110 and a UV LED installation unit 160 had a diameter of 133.5 mm; a UV LED installation unit cap 162 had a diameter of 200 mm; a maximum height difference between the UV LED installation unit and a UV LED installation unit cap was 8 mm; insect passage holes 121 had a total area of 4,882.1 mm2; mesh openings 173 had a total area of 9,269.3 mm2; and each of the insect passage holes 121 was set to have an area of 100 mm2 to 225 mm2 such that the insect filter 120 can selectively filter insects having a larger volume than mosquitoes while allowing mosquitoes to pass therethrough.

Further, the insect trap included a suction fan 150 having a diameter of 90 mm and three fan blades 151 having a height of 25 mm from a lowermost end to an uppermost end thereof and separated a minimum distance of 2 mm from an inner wall of the main body 110.

Referring to Figure 10, air collector side openings 132 were arranged in a mesh shape, an air exhaust port 133 had a circular shape having a diameter of 16 mm, and an air collector 130 having a conical shape, the diameter of which gradually decreases from the suction fan 150 to the collector 170, was disposed between the suction fan 150 and the collector 170.

Furthermore, a UV LED module 161 was a double-side type PCB and included three UV LED chips 165 disposed in a zigzag arrangement on each side of the PCB. The UV LED module 161 was set to emit light having a wavelength of 365 mm at an input voltage of 12V and an input current of 75 mA to 85 mA.

### Preparative Example 2 to 7

Insect traps were manufactured in the same manner as in Preparative Example 1 except that the number of fan blades 151 was set to 1, 2, 4, 5, 6, and 7, respectively.

### Preparative Example 8 to 15

Insect traps were manufactured in the same manner as in Preparative Example 1 except that the mesh openings 173 had a total area of 8365.5 mm2, 7508.1 mm2, 6308.9 mm2, 5932.3 mm2, 4882.1 mm2, 4432.3 mm2, 3932.3 mm2, and 2932.3 mm2, respectively.

### Preparative Example 16 to 20

Insect traps were manufactured in the same manner as in Preparative Example 1 except that the minimum separation distance from the fan blades 151 and the inner wall of the main body 110 was set to 0.5 mm, 1 mm, 3 mm, 4 mm, and 5 mm, respectively.

### Preparative Example 21 to 25

Insect traps were manufactured in the same manner as in Preparative Example 1 except that two buttresses 180 were set to have a height of 20 mm, 30 mm, 40 mm, 50 mm, and 60 mm, respectively.

### Experimental Example 1 (Measurement of collection efficiency according to power)

While the motor of the insect trap manufactured in Preparative Example 1 was controlled such that the suction fan 150 was rotated at 2,100 RPM and power applied to the UV LED module 161 was controlled as listed in the following Table 1, the insect trap was left outdoors under conditions of a temperature of 26±1°C and a relative humidity of 50±5% for 6 hours, followed by measuring the number of mosquitoes collected in the insect trap.

**Table 1**

| | | | | |
|---|---|---|---|---|
| Power (mW) | 600 | 1000 | 1500 | 2000 |
| Number of collected mosquitoes | 19 | 33 | 31 | 18 |

As shown in Table 1, the insect trap according to the present disclosure had improved mosquito collection efficiency when power was controlled to 1,000 mW to 1,500 mW.

### Experimental Example 2 (Measurement of the number of dead mosquitoes and air stream velocity according to rotational speed of suction fan and the number of fan blades)

After each of the insect traps manufactured in Preparative Example 1 to 7 was left outdoors under conditions of a temperature of 26±1°C and a relative humidity of 50±5% for 6 hours, the number of dead mosquitoes attached to the fan blades 151 of the suction fan 150 was counted, and results are shown in Table 2. In Table 2, when the number of mosquitoes attached to the fan blades 151 was 15 or less, the test result was evaluated as being good.

**Table 2**

| Number of fan blades | Number of dead mosquitoes attached to fan blades according to RPM of suction fan | | | | | |
|---|---|---|---|---|---|---|
| | 3000 RPM | 2800 RPM | 2250 RPM | 1800 RPM | 1500 RPM | 1400 RPM |
| 7 | 26 | 18 | 10 (good) | 5 (good) | 1 (good) | 1 (good) |
| 6 | 20 | 15 (good) | 6 (good) | 3 (good) | 1 (good) | 1 (good) |
| 5 | 17 | 15 (good) | 4 (good) | 2 (good) | 1 (good) | 0 (good) |
| 3 | 10 (good) | 9 (good) | 2 (good) | 1 (good) | 0 (good) | 0 (good) |
| 2 | 5 (good) | 3 (good) | 1 (good) | 0 (good) | 0 (good) | 0 (good) |
| 1 | 2 (good) | 0 (good) | 0 (good) | 0 (good) | 0 (good) | 0 (good) |

In addition, the air stream velocity was measured at an intermediate portion between an upper end of the main body 110 and the UV LED installation unit 160 in the insect trap manufactured in Preparative Example 1 to 7 using an air stream velocity tester (TSI 9515, TSI Co., Ltd.), and results are shown in Table 3. When the air stream velocity was in the range of 0.5 m/s to 2.5 m/s, the test result was evaluated as being good.

**Table 3**

| Number of fan blades | Air stream velocity according to RPM of suction fan | | | | | |
|---|---|---|---|---|---|---|
| | 3000 RPM | 2800 RPM | 2250 RPM | 1800 RPM | 1500 RPM | 1400 RPM |
| 7 | 1.8 m/s (good) | 1.5 m/s (good) | 1.1 m/s (good) | 0.8 m/s (good) | 0.7 m/s (good) | 0.6 m/s (good) |
| 6 | 1.6 m/s (good) | 1.3 m/s (good) | 1.0 m/s (good) | 0.7 m/s (good) | 0.6 m/s (good) | 0.5 m/s (good) |
| 5 | 1.4 m/s (good) | 1.2 m/s (good) | 0.9 m/s (good) | 0.6 m/s (good) | 0.5 m/s (good) | 0.4 m/s |
| 3 | 1.1 m/s (good) | 0.8 m/s (good) | 0.7 m/s (good) | 0.5 m/s (good) | 0.3 m/s | 0.3 m/s |
| 2 | 0.7 m/s (good) | 0.7 m/s (good) | 0.5 m/s (good) | 0.5 m/s (good) | 0.2 m/s | 0.2 m/s |
| 1 | 0.4 m/s | 0.4 m/s | 0.3 m/s | 0.2 m/s | 0.1 m/s | 0.1 m/s |

As shown in Tables 2 and 3, when the number of fan blades 151 of the suction fan 150 was two to six and the suction fan 150 was rotated at 1,500 RPM to 2,800 RPM, an air stream velocity of 0.5 m/s to 2.5 m/s was generated to provide high efficiency in enticement and suction of mosquitoes, and the number of dead mosquitoes attached to the fan blades 151 could be reduced.

### Experimental Example 3 (Measurement of air stream velocity according to ratio of total area of insect passage holes to total area of mesh member openings)

While the motor of each of the insect traps manufactured in Preparative Example 1 and Preparative Example 8 to 15 was controlled such that the suction fan 150 was rotated at 2,100 RPM, the air stream velocity was measured at an intermediate portion between the upper end of the main body 110 and the UV LED installation unit 160 using an air stream velocity tester (TSI 9515, TSI Co., Ltd.), and results are shown in Table 4. When the air stream velocity was in the range of 0.5 m/s to 2.5 m/s, the test result was evaluated as being good.

**Table 4**

| | | | | | | | | | |
|---|---|---|---|---|---|---|---|---|---|
| A | 4882.1 | 4882.1 | 4882.1 | 4882.1 | 4882.1 | 4882.1 | 4882.1 | 4882.1 | 4882.1 |
| B | 9269.3 | 8365.5 | 7508.1 | 6308.9 | 5932.3 | 4882.1 | 4432.3 | 3932.3 | 2932.3 |
| C | 1.90 | 1.71 | 1.54 | 1.29 | 1.22 | 1.00 | 0.91 | 0.81 | 0.60 |
| D | 1.1 (good) | 1.1 (good) | 1.1 (good) | 1.1 (good) | 1.1 (good) | 1.0 (good) | 0.9 (good) | 0.7 (good) | 0.3 |

| | | | | | | | | | |
|---|---|---|---|---|---|---|---|---|---|
| A: Total area of insect passage holes (mm2) B: Total area of mesh member openings (mm2) C: Ratio of A:B D: Air stream velocity (m/s) measured at intermediate portion between upper end of main body and UV LED installation unit 160 | | | | | | | | | |

As shown in Table 4, when the ratio of the total area of the insect passage holes 121 to the total area of the mesh openings 173 was 0.8 or more, the insect trap could generate an air stream velocity of 0.5 m/s to 2.5 m/s providing high efficiency in enticement and suction of mosquitoes.

### Experimental Example 4 (Measurement of air stream velocity and noise level according to minimum distance from suction fan to inner wall of main body)

While the motor of each of the insect traps manufactured in Preparative Example 1 and Preparative Examples 16 to 20 was controlled such that the suction fan 150 was rotated at 2,100 RPM, the air stream velocity was measured at an intermediate portion between the upper end of the main body 110 and the UV LED installation unit 160 using an air stream velocity tester (TSI 9515, TSI Co., Ltd.), and results are shown in Table 5. In addition, under conditions of normal noise of 29.8 dBA, a noise level was measured at a location separated a horizontal distance of 1.5 m from each of the insect traps manufactured in Preparative Example 1 and Preparative Examples 16 to 20 using a noise level tester (CENTER 320, TESTO Co., Ltd.), and results are shown in Table 5. When the air stream velocity was in the range of 0.5 m/s to 2.5 m/s and the noise level was 38 dBA or less, the test result was evaluated as being good.

**Table 5**

| | | | | | |
|---|---|---|---|---|---|
| E | 0.5 | 1 | 2 | 3 | 4 |
| F | 1.6 (good) | 1.4 (good) | 1.1 (good) | 1.0 (good) | 0.8 (good) |
| G | 38.1 | 35.3 (good) | 33.4 (good) | 32.7 (good) | 31.5 (good) |

| | | | | | |
|---|---|---|---|---|---|
| E: Shortest distance (mm) between suction fan and inner wall of main body F: Air stream velocity (m/s) measured at intermediate portion between upper end of main body 110 and UV LED installation unit 160 G: Noise level (dBA) | | | | | |

As shown in Table 5, when the minimum distance from the suction fan 150 to the inner wall of the main body 110 was in the range of 1 mm to 5 mm, the insect trap could generate an air stream velocity of 0.5 m/s to 2.5 m/s providing high efficiency in enticement and suction of mosquitoes, and provided a noise level of 38 dBA or less.

### Experimental Example 5 (Measurement of air stream velocity and collection efficiency according to separation distance from UV LED installation unit to upper end of main body)

While the motor of each of the insect traps manufactured in Preparative Example 1 and Preparative Examples 21 to 25 was controlled such that the suction fan 150 was rotated at 2,100 RPM, the air stream velocity was measured at an intermediate portion between the upper end of the main body 110 and the UV LED installation unit 160 using an air stream velocity tester (TSI 9515, TSI Co., Ltd.), and results are shown in Table 6. In addition, 15 hours after inputting mosquitoes 20 to a closed space, the number of mosquitoes collected in the insect trap was measured, and results are shown in Table 6. When the air stream velocity was in the range of 0.5 m/s to 2.5 m/s and collection ratio was 70% or more, the test result was evaluated as being good.

**Table 6**

| | | | | | |
|---|---|---|---|---|---|
| H | 20 | 30 | 35 | 40 | 50 |
| I | 1.5 (good) | 1.2 (good) | 1.1 (good) | 1.0 (good) | 0.9 (good) |
| J | 8 | 15 | 16 | 16 | 14 |
| K | 40 | 75 (good) | 80 (good) | 80 (good) | 70 (good) |

| | | | | | |
|---|---|---|---|---|---|
| H: Height of buttress 180 (mm) I: Air stream velocity (m/s) measured at intermediate portion between upper end of main body 110 and UV LED installation unit 160 J: Number of collected mosquitoes K: Collection ratio (%) | | | | | |

As shown in Table 6, when the distance between the upper end of the main body 110 and the UV LED installation unit 160 was in the range of 20 mm to 50 mm, the insect trap could generate an air stream velocity of 0.5 m/s to 2.5 m/s providing high efficiency in enticement and suction of mosquitoes, and could improve mosquito collection efficiency.

### Experimental Example 6

The RPM of the suction fan 150 of the insect trap manufactured in Preparative Example 1 was gradually increased and controlled such that the air stream velocity measured at an intermediate portion between the upper end of the main body 110 and the UV LED installation unit 160 using an air stream velocity tester (TSI 9515, TSI Co., Ltd.) was in the range of 0.5 m/s to 3.0 m/s. An average number of collected mosquitoes and a noise level at each air stream velocity were measured.

To measure the average number of collected mosquitoes, the number of mosquitoes collected in the insect trap was measured five times and averaged 15 hours after inputting mosquitoes 20 to a closed space, and the noise level was measured at a location separated a horizontal distance of 1.5 m from the insect using a noise level tester (CENTER 320, TESTO Co., Ltd.), and results are shown in Table 7. When the air stream velocity was in the range of 0.5 m/s to 2.5 m/s, the collection ratio was 70% or more, and the noise level was 38 dBA or less, the test result was evaluated as being good.

**Table 7**

| | | | | | | |
|---|---|---|---|---|---|---|
| L | 0.5 (good) | 0.7 (good) | 1.0 (good) | 1.5 (good) | 2.0 (good) | 3.0 |
| M | 0.5 | 14.0 | 14.0 | 14.5 | 15 | 15.5 |
| N | 2.5 | 70.0 (good) | 70.0 (good) | 72.5 (good) | 75 (good) | 77.5 (good) |
| O | 25.2 (good) | 28.5 (good) | 33.4 (good) | 35.3 (good) | 38.0 (good) | 39.0 |

| | | | | | | |
|---|---|---|---|---|---|---|
| L: Air stream velocity (m/s) measured at intermediate portion between upper end of main body 110 and UV LED installation unit 160 M: Average number of collected mosquitoes N: Collection ratio (%) O: Noise level (dBA) | | | | | | |

As shown in Table 7, when the air stream velocity measured at an intermediate portion between the upper end of the main body 110 and the UV LED installation unit 160 was in the range of 0.7 m/s to 2.0 m/s, the collection ratio of mosquitoes was 70 % or more, which is a value evaluated as good, and the noise level was 38 dBA or less.

Although some embodiments have been described with reference to the accompanying drawings, it should be understood that these embodiments are given by way of illustration only, and that various modifications, variations, and alterations can be made by those skilled in the art . . The scope of the present invention should be limited only by the accompanying claims .

## Claims

1. An insect trap (1000) adapted to attract and collect insects using UV light, the insect trap (1000) comprising:
a main body (110);
an insect filter (120) disposed on the main body (110) and allowing insects to pass therethrough;
a motor (140) disposed below the insect filter (120);
an air collector (130) disposed at the lower side of the main body (110);
a suction fan (150) disposed under the motor (140) and rotated by the motor(140);
a plate-shaped UV LED installation unit (160) disposed above the insect filter (120) and provided with a UV LED module (161);
a buttress (180) supporting the UV LED installation unit (160) above the main body (110) while separating the UV LED installation unit (160) above the main body (110) so as to allow insects to be suctioned into a space between the main body (110) and the UV LED installation unit (160); and
an insect collector (170) disposed under the main body (110) and collecting insects;
wherein the air collector (130) having a conical shape, the diameter of which gradually decreases away from the suction fan (150), wherein
the insect filter (120) has a lattice shape including a plurality of insect passage openings (121) selectively allowing insects to pass therethrough, **characterized in that** each of the insect passage openings (121) has an area of 100 mm2 to 225 mm2, thus preventing insects having a larger volume than mosquitoes from passing through the insect passage openings (121).

2. The insect trap (1000) according to claim 1, wherein the air collector (130) is mounted on the lower side of the main body (110) and comprises air collector ribs (131), air collector side openings (132) and an air exhaust port (133) such that insects suctioned by the suction fan (150) can be discharged to the insect collector (170).

3. The insect trap (1000) according to claim 1,
wherein a ratio of vertical distance from the main body (110) to the UV LED installation unit (160) to height of the main body (110) ranges from 1:1 to 1:2, and
wherein a ratio of vertical distance from the insect collector (170) to the UV LED installation unit (160) to height of the insect collector (170) ranges from 1:0.5 to 1:2.

4. The insect trap (1000) according to claim 1, wherein the insect collector (170) comprises a mesh (171) through which air is discharged outside from the insect trap (1000) by the suction fan (150), and wherein the mesh (171) comprises mesh ribs (172) and mesh openings (173) formed between the mesh ribs (172) such that an air stream generated by the suction fan (150) is discharged from the insect collector (170) through the mesh openings (173), and a ratio of total area of the insect passage openings (121) of the insect filter (120) to total area of the mesh openings (173) ranges from 1:0.8 to 1:3.0.

5. The insect trap (1000) according to claim 1, wherein the UV LED module (161) is mounted on a lower surface of the UV LED installation unit (160) such that light emitted from the UV LED module (161) travels in a horizontal direction when the trap is positioned so that its main axis is oriented vertically.

6. The insect trap (1000) according to any one of claims 1 to 5, wherein the UV LED installation unit (160) is provided with a transparent UV LED module cover having a shape corresponding to the UV LED module (161) and protecting the UV LED module (161).

7. The insect trap according to any one of claims 1 to 5, wherein the UV LED installation unit (160) is provided on a lower surface thereof with a photocatalyst filter capable of generating carbon dioxide using UV light emitted from the UV LED module (161) as a catalyst.

8. The insect trap (1000) according to claim 1, wherein the plurality of insect passage openings (121) being defined by circular members (122) and radial members (123), and
wherein the insect passage openings (121) are spaced apart from each other by a plurality of circular members (122) and a plurality of radial members (123) arranged around a center of the insect filter (120) in an arc shape having a central angle of 20° to 40°, each of the circular members (122) being spaced apart from another adjacent circular member (122) by a distance of 1.0 cm to 1.5 cm.

## Patentansprüche

1. Insektenfalle (1000), die vorgesehen ist, um Insekten unter Verwendung von UV-Licht anzulocken und zu sammeln, wobei die Insektenfalle (1000) umfasst:
einen Hauptkörper (110);
einen Insektenfilter (120), der auf dem Hauptkörper (110) angeordnet ist und ermöglicht, dass Insekten hindurch gelangen;
einen Motor (140), der unter dem Insektenfilter (120) angeordnet ist;
einen Luftsammler (130), der an der unteren Seite des Hauptkörpers (110) angeordnet ist;
einen Ansaugventilator (150), der unter dem Motor (140) angeordnet ist und durch den Motor (140) gedreht wird;
eine plattenförmige UV-LED-Installationseinheit (160), die über dem Insektenfilter (120) angeordnet ist und mit einem UV-LED-Modul (161) ausgestattet ist;
einen Pfeiler (180), der die UV-LED-Installationseinheit (160) über dem Hauptkörper (110) stützt, während die UV-LED-Installationseinheit (160) über dem Hauptkörper (110) getrennt wird, um so zu ermöglichen, dass Insekten in einen Raum zwischen dem Hauptkörper (110) und der UV-LED-Installationseinheit (160) gesaugt werden; und
einen Insektensammler (170), der unter dem Hauptkörper (110) angeordnet ist und Insekten sammelt;
wobei der Luftsammler (130) eine konische Form hat, deren Durchmesser mit der Entfernung von dem Ansaugventilator (150) allmählich abnimmt,
wobei der Insektenfilter (120) eine Gitterform aufweist, die eine Vielzahl von Insektendurchgangsöffnungen (121) aufweist, die ermöglichen, dass Insekten selektiv hindurch gelangen, **dadurch gekennzeichnet, dass**
jede der Insektendurchgangsöffnungen (121) eine Fläche von 100 mm² bis 225 mm² aufweist, wodurch verhindert wird, dass Insekten mit einem größeren Volumen als Moskitos durch die Insektendurchgangsöffnungen (121) gelangen.

2. Insektenfalle (1000) nach Anspruch 1, wobei der Luftsammler (130) auf der unteren Seite des Hauptkörpers (110) montiert ist und Luftsammlerstege (131), Luftsammlerseitenöffnungen (132) und eine Abluftöffnung (133) umfasst, so dass durch den Ansaugventilator (150) angesaugte Insekten an den Insektensammler (170) ausgetragen werden können.

3. Insektenfalle (1000) nach Anspruch 1,
wobei ein Verhältnis von vertikalem Abstand von dem Hauptkörper (110) zu der UV-LED-Installationseinheit (160) zu der Höhe des Hauptkörpers (110) im Bereich von 1:1 bis 1:2 liegt, und
wobei ein Verhältnis von vertikalem Abstand von dem Insektensammler (170) zu der UV-LED-Installationseinheit (160) zu der Höhe des Insektensammlers (170) im Bereich von 1:0,5 bis 1:2 liegt.

4. Insektenfalle (1000) nach Anspruch 1, wobei der Insektensammler (170) ein Maschenmaterial (171) umfasst, durch das Luft aus der Insektenfalle (1000) mittels des Ansaugventilators (150) nach draußen ausgetragen wird, und
wobei das Maschenmaterial (171) Maschenstege (172) und Maschenöffnungen (173) umfasst, die zwischen den Maschenstegen (172) gebildet sind, so dass ein durch den Ansaugventilator (150) generierter Luftstrom aus dem Insektensammler (170) durch die Maschenöffnungen (173) hindurch ausgetragen wird, und wobei ein Verhältnis der Gesamtfläche der Insektendurchgangsöffnungen (121) des Insektenfilters (120) zu der Gesamtfläche der Maschenöffnungen (173) im Bereich von 1:0,8 bis 1:3,0 liegt.

5. Insektenfalle (1000) nach Anspruch 1, wobei das UV-LED-Modul (161) an einer Unterseite der UV-LED-Installationseinheit (160) montiert ist, so dass Licht, das von dem UV-LED-Modul (161) emittiert wird, sich in eine horizontale Richtung bewegt, wenn die Falle so positioniert ist, dass ihre Hauptachse vertikal orientiert ist.

6. Insektenfalle (1000) nach einem der Ansprüche 1 bis 5, wobei die UV-LED-Installationseinheit (160) mit einer transparenten UV-LED-Modulabdeckung ausgestattet ist, die eine Form hat, welche dem UV-LED-Modul (161) entspricht und das UV-LED-Modul (161) schützt.

7. Insektenfalle nach einem der Ansprüche 1 bis 5, wobei die UV-LED-Installationseinheit (160) auf einer Unterseite davon mit einem Photokatalysatorfilter ausgestattet ist, der in der Lage ist, unter Verwendung von UV-Licht, das von dem UV-LED-Modul (161) emittiert wird, als Katalysator Kohlendioxid zu generieren.

8. Insektenfalle (1000) nach Anspruch 1, wobei die Vielzahl der Insektendurchgangsöffnungen (121) durch runde Elemente (122) und radiale Elemente (123) definiert ist, und wobei die Insektendurchgangsöffnungen (121) durch eine Vielzahl von runden Elementen (122) und eine Vielzahl von radialen Elementen (123) voneinander beabstandet sind, die um eine Mitte des Insektenfilters (120) in einer Bogenform mit einem Mittelwinkel von 20° bis 40° angeordnet sind, wobei jedes der runden Elemente (122) von einem anderen benachbarten runden Element (122) um einen Abstand von 1,0 cm bis 1,5 cm beabstandet ist.

## Revendications

1. Piège à insectes (1000) adapté pour attirer et collecter des insectes en utilisant une lumière UV, le piège à insectes (1000) comprenant :
un corps principal (110) ;
un filtre à insectes (120) disposé sur le corps principal (110) et permettant aux insectes de passer à travers celui-ci ;
un moteur (140) disposé sous le filtre à insectes (120) ;
un collecteur d'air (130) disposé sur le côté inférieur du corps principal (110) ;
un ventilateur d'aspiration (150) disposé sous le moteur (140) et mis en rotation par le moteur (140) ;
une unité d'installation de DEL UV en forme de plaque (160) disposée au-dessus du filtre à insectes (120) et munie d'un module de DEL UV (161) ;
un contrefort (180) supportant l'unité d'installation de DEL UV (160) au-dessus du corps principal (110) tout en séparant l'unité d'installation de DEL UV (160) au-dessus du corps principal (110) de manière à permettre l'aspiration des insectes dans un espace entre le corps principal (110) et l'unité d'installation de DEL UV (160) ; et
un collecteur d'insectes (170) disposé sous le corps principal (110) et collectant des insectes ;
le collecteur d'air (130) ayant une forme conique, dont le diamètre diminue progressivement en s'éloignant du ventilateur d'aspiration (150),
le filtre à insectes (120) ayant une forme de treillis comprenant une pluralité d'ouvertures de passage d'insectes (121) permettant sélectivement aux insectes de passer à travers, **caractérisé en ce que**
chacune des ouvertures de passage d'insectes (121) a une surface de 100 mm² à 225 mm², empêchant ainsi les insectes ayant un plus grand volume que les moustiques de passer à travers l'ouverture de passage d'insectes (121).

2. Piège à insectes (1000) selon la revendication 1, le collecteur d'air (130) étant monté sur le côté inférieur du corps principal (110) et comprenant des nervures de collecteur d'air (131), des ouvertures latérales de collecteur d'air (132) et un orifice d'évacuation d'air (133) de sorte que des insectes aspirés par le ventilateur d'aspiration (150) peuvent être évacués vers le collecteur d'insectes (170).

3. Piège à insectes (1000) selon la revendication 1,
le rapport de la distance verticale entre le corps principal (110) et l'unité d'installation de DEL UV (160) sur la hauteur du corps principal (110) étant compris entre 1:1 et 1:2, et
le rapport de la distance verticale entre le collecteur d'insectes (170) et l'unité d'installation de DEL UV (160) sur la hauteur du collecteur d'insectes (170) étant compris entre 1:0,5 et 1:2.

4. Piège à insectes (1000) selon la revendication 1, le collecteur d'insectes (170) comprenant un maillage (171) à travers lequel l'air est évacué à l'extérieur du piège à insectes (1000) par le ventilateur d'aspiration (150), et
le maillage (171) comprenant des nervures de maillage (172) et des ouvertures de maillage (173) formées entre les nervures de maillage (172) de sorte qu'un flux d'air généré par le ventilateur d'aspiration (150) est évacué du collecteur d'insectes (170) à travers les ouvertures de maillage (173), et un rapport de la surface totale des ouvertures de passage d'insectes (121) du filtre à insectes (120) sur la surface totale des ouvertures de maillage (173) est compris entre 1:0,8 et 1:3,0.

5. Piège à insectes (1000) selon la revendication 1, le module de DEL UV (161) étant monté sur une surface inférieure de l'unité d'installation de DEL UV (160) de sorte que la lumière émise par le module de DEL UV (161) se déplace dans une direction horizontale lorsque le piège est positionné de sorte que son axe principal est orienté verticalement.

6. Piège à insectes (1000) selon l'une quelconque des revendications 1 à 5, l'unité d'installation de DEL UV (160) étant pourvue d'un couvercle de module de DEL UV transparent ayant une forme correspondant au module de DEL UV (161) et protégeant le module de DEL UV (161).

7. Piège à insectes selon l'une quelconque des revendications 1 à 5, l'unité d'installation de DEL UV (160) étant pourvue sur une surface inférieure de celle-ci d'un filtre photocatalyseur capable de générer du dioxyde de carbone en utilisant la lumière UV émise par le module de DEL UV (161) comme catalyseur.

8. Piège à insectes (1000) selon la revendication 1, la pluralité d'ouvertures de passage d'insectes (121) étant définies par des éléments circulaires (122) et des éléments radiaux (123), et
les ouvertures de passage d'insectes (121) étant espacées les unes des autres par une pluralité d'éléments circulaires (122) et une pluralité d'éléments radiaux (123) agencés autour d'un centre du filtre à insectes (120) sous la forme d'un arc ayant un angle central de 20° à 40°, chacun des éléments circulaires (122) étant espacé d'un autre élément circulaire adjacent (122) d'une distance de 1,0 cm à 1, 5 cm.
